# EUROPEAN PATENT APPLICATION

(11) **EP 4 818 471 A2**
(43) Date of publication of application: **07.10.2026**
(21) Application number: 26170350.8
(22) Date of filing: 01.04.2026
(51) Int. Cl.: F01D 5/20

(54) **TURBINE ENGINE ROTOR BLADE WITH TIP SHELF**

(30) Priority: 02.04.2025 US 202519098644
(71) Applicant: RTX Corporation, Farmington, CT 06032 (US)
(72) Inventor: SIW, Sin Chien, Simsbury (US); GUSTAFSON, Eric F., Glastonbury (US); ASARE, Ted A., Glastonbury (US)
(74) Representative: Dehns

(57) **Abstract**

An airfoil (102) extends longitudinally between a leading edge (120) and a trailing edge (122), laterally between a first side (124A) and a second side (124B), and spanwise from a base (108) to a tip (112). The airfoil (102) includes a body section (126), a tip section (128) and a channel (130). The body section (126) extends spanwise from the base (108) to a shelf (136), and laterally between the first side (124A) and the second side (124B). The tip section (128) is connected to the body section (126), extends spanwise from the shelf (136) to the tip (112) and laterally between the second side (124B) and a sidewall (140). The channel (130) projects spanwise into the airfoil (102) from the tip (112) to the shelf (136) and laterally into the airfoil (102) from the first side (124A) to the sidewall (140). The tip section (128) is formed with a density that varies along the channel (130).

## Description

### BACKGROUND OF THE DISCLOSURE

### 1. Technical Field

This disclosure relates generally to a turbine engine and, more particularly, to a rotor blade with a tip shelf and methods for manufacture thereof.

### 2. Background Information

Various types and configurations of rotor blades are known in the art, including those rotor blades with tip shelves. Various methods are also known in the art for manufacturing rotor blades, including remanufacturing the rotor blades. While these known rotor blades and methods of manufacture have various benefits, there is still room in the art for improvement.

### SUMMARY OF THE DISCLOSURE

According to an aspect of the present disclosure, a method of manufacture is provided. During this manufacturing method, an airfoil is provided. The airfoil extends longitudinally between a leading edge and a trailing edge. The airfoil extends laterally between a first side and a second side. The airfoil extends spanwise from a base to a tip. The airfoil includes a body section, a tip section and a channel. The body section extends spanwise from the base to a shelf. The body section extends laterally between the first side and the second side. The tip section is connected to the body section and extends spanwise from the shelf to the tip. The tip section extends laterally between the second side and a sidewall. The channel projects spanwise into the airfoil from the tip to the shelf. The channel projects laterally into the airfoil from the first side to the sidewall. The providing of the airfoil includes forming the tip section with a density that varies along the channel.

According to another aspect of the present disclosure, another method of manufacture is provided. During this manufacturing method, a previously manufactured airfoil is machined using a preform airfoil. Material is built up onto the preform airfoil using an additive manufacturing process to provide a remanufactured airfoil. The remanufactured airfoil includes a body section and a tip section connected to the body section. At least a portion of the tip section is formed using the additive manufacturing process. The remanufactured airfoil is provided according to a design specification that is different than a design specification for the previously manufactured airfoil.

According to still another aspect of the present disclosure, an apparatus is provided for a turbine engine. This apparatus includes a turbine blade comprising an airfoil. The airfoil extends longitudinally between a leading edge and a trailing edge. The airfoil extends laterally between a pressure side and a suction side. The airfoil extends spanwise from a base to a tip. The airfoil includes a body section, a tip section and a channel. The body section extends spanwise from the base to a shelf. The body section extends laterally from the pressure side to the suction side. The body section includes one or more cooling apertures formed in the shelf. The tip section is connected to the body section. The tip section extends spanwise from the shelf to the tip. The tip section extends laterally from the suction side to a sidewall. The channel projects spanwise into the airfoil from the tip to the shelf. The channel projects laterally into the airfoil from the pressure side to the sidewall. A density of at least a portion of the tip section varies longitudinally and/or spanwise along the channel.

The forming of the tip section may include additively manufacturing the tip section.

The additively manufacturing may be performed using directed laser metal deposition.

The providing of the airfoil may also include casting or additively manufacturing the body section. The forming of the tip section may include additively manufacturing the tip section onto the body section.

The body section and an inner portion of the tip section may be formed from cast or additively manufactured material. An outer portion of the tip section may be additively manufactured onto the cast or additively manufactured material.

An inner portion of the body section may be formed from cast material. An outer portion of the body section may be additively manufactured onto the cast material.

The density may vary longitudinally along the channel.

The density at the leading edge may be less than the density at an intermediate location longitudinally between the leading edge and the trailing edge. In addition or alternatively, the density at the trailing edge may be less than the density at the intermediate location.

The density may vary spanwise along the channel.

The density at the tip may be less than the density at a location spanwise between the tip and the body section.

The density may incrementally vary along the channel.

The density may continuously vary along the channel.

The channel may extend longitudinally through the airfoil from the leading edge to the trailing edge.

The airfoil may include one or more cooling apertures disposed on the tip.

The airfoil may include one or more cooling apertures disposed on the shelf.

The manufacturing method may also include: machining a previously manufactured airfoil to provide a preform airfoil, the preform airfoil comprising the body section; and additively manufacturing at least a portion of the tip section onto the preform airfoil to provide the airfoil.

The airfoil may be provided according to an original design specification for the previously manufactured airfoil.

The airfoil may be provided according to a revised design specification that is different than an original design specification for the previously manufactured airfoil.

The body section and the tip section may be formed by a common material.

The manufacturing method may also include installing a turbine blade into a turbine section of a turbine engine. The turbine blade may be configured as or otherwise include the airfoil.

The airfoil may be part of a turbine blade for a turbine section of a turbine engine.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a partial schematic illustration of an engine section for the aircraft propulsion system.
FIG. 3 is a schematic illustration of a blade airfoil between a platform and a rotor shroud.
FIG. 4 is a tip end view illustration of the blade airfoil.
FIG. 5 is a flow diagram of a method for manufacturing a rotor blade.
FIG. 6 is a partial schematic illustration of an engine rotor with a previously manufactured airfoil having a damaged portion.
FIGS. 7A-C are partial schematic illustrations of the engine rotor with the damaged portion removed to provide a preform airfoil with various arrangements.
FIGS. 8A-C are partial schematic illustrations of a remanufactured engine rotor with various arrangements.
FIGS. 9A and 9B are tip end view illustrations of the blade airfoil with various arrangements.
FIGS. 10A and 10B are partial schematic illustrations of the blade airfoil with various arrangements.
FIGS. 11A-C are partial schematic illustrations of the blade airfoil with various material density arrangements.

### DETAILED DESCRIPTION

The present disclosure includes a turbine engine comprising a rotor blade with a tip shelf. The present disclosure also includes methods for manufacturing at least the rotor blade. The term "manufacturing" may describe a method for an original manufacture of the rotor blade; e.g., forming a brand new rotor blade. The term "manufacturing" may also or alternatively describe a method for remanufacture or otherwise repairing of the rotor blade; e.g., restoring one or more features of a previously manufactured rotor blade to brand new condition, similar to brand new condition, better than brand new condition, etc.

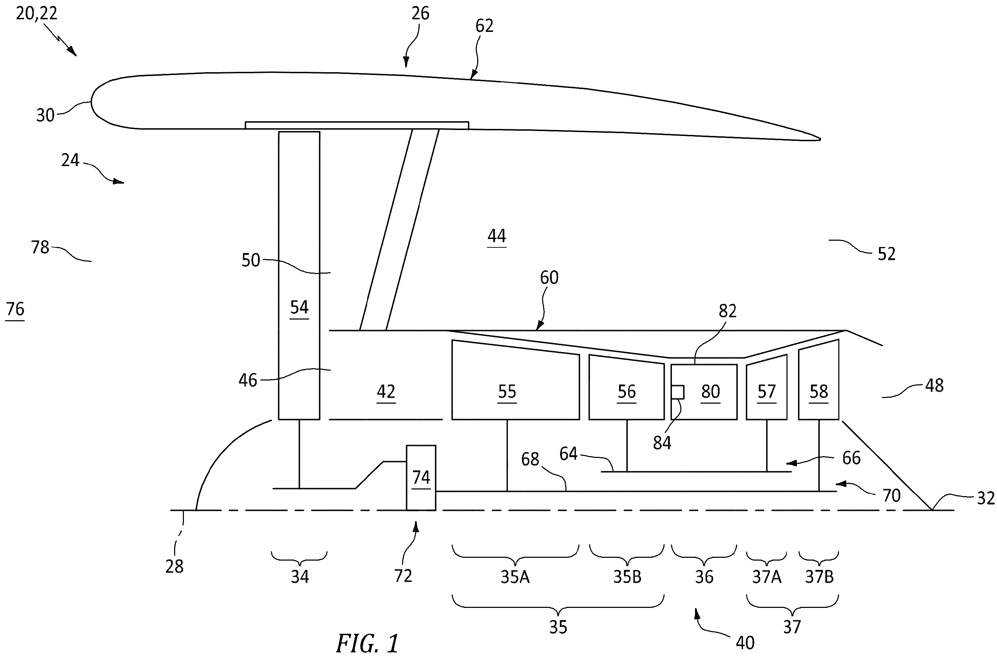

FIG. 1 illustrates a powerplant 20 for an aircraft. The aircraft may be an airplane, a rotorcraft (e.g., a helicopter), a drone (e.g., an unmanned aerial vehicle (UAV)), or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open rotor propulsion system. Moreover, the aircraft powerplant 20 is not limited to propulsion system applications nor aircraft applications. The aircraft powerplant 20, for example, may also (or alternatively) be configured as an electrical power system for the aircraft; e.g., an auxiliary power unit (APU). In another example, the powerplant 20 may be configured as an electrical power system for a ground-based (e.g., industrial) or other installation.

The aircraft propulsion system 22 of FIG. 1 includes a gas turbine engine 24 (e.g., a turbofan engine) housed within a stationary housing structure 26. The aircraft propulsion system 22 extends axially along an axis 28 between an axial upstream, forward end 30 of the aircraft propulsion system 22 and an axial downstream, aft end 32 of the aircraft propulsion system 22. Briefly, the propulsion system axis 28 may be a centerline axis of the aircraft propulsion system 22, the turbine engine 24 and/or one or more of its members. The propulsion system axis 28 may also or alternatively be a rotational axis for one or more members of the turbine engine 24.

The aircraft propulsion system 22 and its turbine engine 24 of FIG. 1 include a propulsor section 34 (e.g., a fan section), a compressor section 35, a combustor section 36 and a turbine section 37. The compressor section 35 of FIG. 1 includes a low pressure compressor (LPC) section 35A and a high pressure compressor (HPC) section 35B. The turbine section 37 of FIG. 1 includes a high pressure turbine (HPT) section 37A and a low pressure turbine (LPT) section 37B. At least (or only) the LPC section 35A, the HPC section 35B, the combustor section 36, the HPT section 37A and the LPT section 37B collectively form a core 40 of the turbine engine 24. The aircraft propulsion system 22 and its turbine engine 24 of FIG. 1 also include a core flowpath 42 (e.g., an annular core flowpath) and a bypass flowpath 44 (e.g., an annular bypass flowpath). The core flowpath 42 extends sequentially through the LPC section 35A, the HPC section 35B, the combustor section 36, the HPT section 37A and the LPT section 37B from an airflow inlet 46 into the core flowpath 42 to a combustion products exhaust 48 out from the core flowpath 42. The bypass flowpath 44 extends through a bypass duct from an airflow inlet 50 into the bypass flowpath 44 to an airflow exhaust 52 from the bypass flowpath 44. The bypass flowpath 44 and its bypass duct are configured to bypass (e.g., are disposed radially outboard of and extend along) the engine core 40.

The propulsor section 34, the LPC section 35A, the HPC section 35B, the combustor section 36, the HPT section 37A and the LPT section 37B may be arranged sequentially along the propulsion system axis 28. The propulsor section 34 includes a bladed propulsor rotor 54; e.g., a fan rotor. The LPC section 35A includes a bladed low pressure compressor (LPC) rotor 55. The HPC section 35B includes a bladed high pressure compressor (HPC) rotor 56. The HPT section 37A includes a bladed high pressure turbine (HPT) rotor 57. The LPT section 37B includes a bladed low pressure turbine (LPT) rotor 58. These engine rotors 54-58 are housed within the housing structure 26. The housing structure 26 of FIG. 1, for example, includes an inner housing structure 60 (e.g., a core case structure) and an outer housing structure 62 (e.g., a propulsor case structure). The inner housing structure 60 may house one or more of the engine sections 35A-37B and their engine rotors 55-58. The outer housing structure 62 may house at least the propulsor section 34 and its propulsor rotor 54.

Each of the engine rotors 54-58 includes a rotor base (e.g., a disk or a hub) and a plurality of rotor blades. The rotor blades may be arranged into one or more stages axially along the respective engine rotor 54-58. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade. Note, although not shown for ease of illustration, each rotor blade stage of a respective engine rotor 55-58 may be disposed next to and upstream or downstream of a respective neighboring stage of stator vanes for that respective engine section 35A, 35B, 37A, 37B along the core flowpath 42. At least some of the rotor blade stages of a respective engine rotor 55-58 may also be disposed between a neighboring pair of upstream and downstream stages of stator vanes along the core flowpath 42.

The HPC rotor 56 is coupled to and rotatable with the HPT rotor 57. The HPC rotor 56 of FIG. 1, for example, is connected to the HPT rotor 57 through a high speed shaft 64. At least (or only) the HPC rotor 56, the HPT rotor 57 and the high speed shaft 64 collectively form a high speed rotating structure 66; e.g., a high speed spool of the turbine engine 24 and its engine core 40. The high speed rotating structure 66 of FIG. 1 and its members 56, 57 and 64 are rotatable about the propulsion system axis 28.

The LPC rotor 55 is coupled to and rotatable with the LPT rotor 58. The LPC rotor 55 of FIG. 1, for example, is connected to the LPT rotor 58 through a low speed shaft 68. At least (or only) the LPC rotor 55, the LPT rotor 58 and the low speed shaft 68 collectively form a low speed rotating structure 70; e.g., a low speed spool of the turbine engine 24 and its engine core 40. The low speed rotating structure 70 of FIG. 1 and its members 55, 58 and 68 are rotatable about the propulsion system axis 28.

The low speed rotating structure 70 is coupled to the propulsor rotor 54 through a drivetrain 72. This drivetrain 72 may be configured as a geared drivetrain, where a geartrain 74 (e.g., a transmission, a speed change device, an epicyclic geartrain, etc.) is disposed between and operatively couples the propulsor rotor 54 to the low speed rotating structure 70 and its LPT rotor 58. With this arrangement, the propulsor rotor 54 may rotate at a different (e.g., slower) rotational speed than the low speed rotating structure 70 and its LPT rotor 58. Here, the propulsor rotor 54 and the low speed rotating structure 70 may rotate in a common (the same) direction about the propulsion system axis 28 or in opposite directions about the propulsion system axis 28 depending, for example, upon the specific configuration of the geartrain 74. Alternatively, the drivetrain 72 may be configured as a direct-drive drivetrain, where the geartrain 74 is omitted. With such an arrangement, the propulsor rotor 54 rotates at a common (the same) rotational speed as the low speed rotating structure 70 and its LPT rotor 58.

During operation of the aircraft propulsion system 22 of FIG. 1, ambient air from an environment 76 external to the aircraft and its aircraft propulsion system 22 enters the aircraft propulsion system 22 and its turbine engine 24 through an airflow inlet 78. This air is propelled by the rotating propulsor rotor 54 in a downstream, aft direction towards the propulsion system aft end 32.

An outer stream of the air propelled by the rotating propulsor rotor 54 is directed into the bypass flowpath 44 through its bypass inlet 50. The air entering the bypass flowpath 44 may be referred to as "bypass air". This bypass air flows through the bypass flowpath 44 and is directed out of the aircraft propulsion system 22 through the bypass exhaust 52 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 54 is directed into the core flowpath 42 through its core inlet 46. The air entering the core flowpath 42 may be referred to as "core air". This core air is compressed by the LPC rotor 55 and the HPC rotor 56 and is directed into a combustion chamber 80 (e.g., annular combustion chamber) of a combustor 82 (e.g., annular combustor) in the combustor section 36. Fuel is injected into the combustion chamber 80 by one or more fuel injectors 84 and mixed with the compressed core air to provide a fuel-air mixture. This fuel-air mixture is ignited and combustion products thereof flow through and sequentially drive rotation of the HPT rotor 57 and the LPT rotor 58. The rotation of the HPT rotor 57 and the LPT rotor 58 respectively drive rotation of the HPC rotor 56 and the LPC rotor 55 and, thus, compression of the air received from the core inlet 46. The rotation of the LPT rotor 58 also drives rotation of the propulsor rotor 54 through the drivetrain 72.

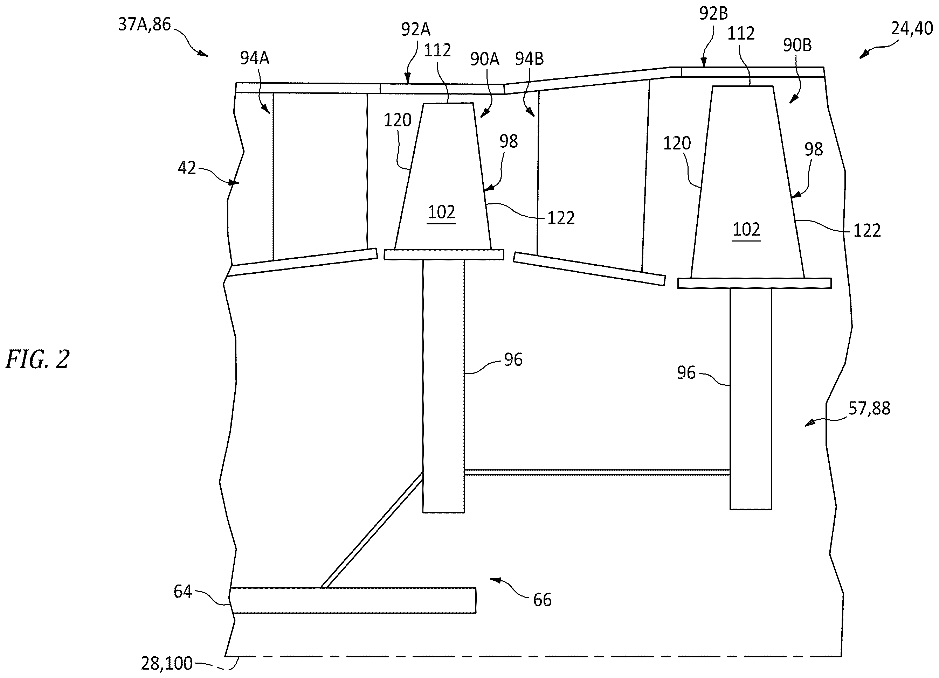

FIG. 2 illustrates a section 86 of the turbine engine 24. For ease of description, this engine section 86 is described below as the HPT section 37A in the turbine engine 24. However, it is contemplated the engine section 86 may alternatively be the LPT section 37B in the turbine engine 24 (see FIG. 1) or another section of the turbine engine 24 with airfoils which would benefit from the features and/or methods described below.

The engine section 86 of FIG. 2 includes an engine rotor 88 (e.g., the HPT rotor 57) configured with a plurality of rotor stages 90A and 90B (generally referred to as "90"). The engine section 86 of FIG. 2 includes a respective outer rotor shroud 92A, 92B (generally referred to as "92") radially outboard of and circumscribing each rotor stage 90A, 90B, where each rotor shroud 92 may be configured as a blade outer air seal (BOAS) for the respective rotor stage 90. The engine section 86 of FIG. 2 also includes a plurality of stator vane structures 94A and 94B (generally referred to as "94") interspersed with the rotor stages 90 and the associated rotor shrouds 92. The first rotor stage 90A and its associated first rotor shroud 92A of FIG. 2, for example, are located next to and between the first stator vane structure 94A and the second stator vane structure 94B along the core flowpath 42. The second rotor stage 90B and its associated second rotor shroud 92B of FIG. 2 are located next to and downstream of the second stator vane structure 94B along the core flowpath 42. Here, the engine section 86 is shown as a two-stage section of the turbine engine 24; e.g., a two-stage HPT section. It is contemplated, however, the engine section 86 and its engine rotor 88 may alternatively be configured with a single stage or more than two stages.

Each rotor stage 90 includes a rotor base 96 (e.g., a disk or a hub) and a plurality of rotor blades 98 (e.g., turbine blades). The rotor blades 98 are arranged and may be equispaced circumferentially around the rotor base 96 and a rotational axis 100 of the engine rotor 88 (e.g., the propulsion system axis 28) in an array; e.g., an annular array. Each of the rotor blades 98 is connected to the rotor base 96 at or near a radial outer periphery of the rotor base 96. Each rotor blade 98, for example, may include an attachment (e.g., a root such as a dovetail root or a firtree root) inserted into and mated with a respective receptacle (e.g., slot such as a dovetail slot or a firtree slot) in the rotor base 96 to mechanically attach the respective rotor blade 98 to the rotor base 96. In another example, each rotor blade 98 may be welded or otherwise bonded to the rotor base 96. In still another example, each rotor blade 98 may be formed as an integral part of the rotor base 96.

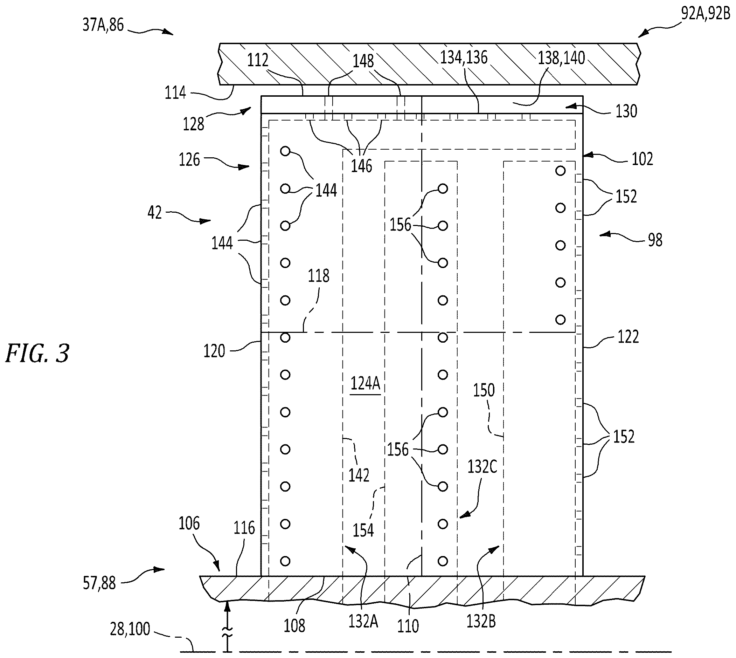

Referring to FIG. 3, each rotor blade 98 may be configured as or otherwise includes a blade airfoil 102; e.g., a turbine blade airfoil. This blade airfoil 102 is disposed radially outboard of and is connected to a platform 106 of the respective rotor stage 90 at a base 108 of the blade airfoil 102. The platform 106 of FIG. 3 is configured to form a radial inner peripheral boundary of a section of the core flowpath 42 that extends across the respective rotor stage 90. A respective circumferential section of the platform 106 may be configured as part of the respective rotor blade 98 where, for example, that rotor blade 98 is mechanically attached to the rotor base 96 (see FIG. 2). Alternatively, the platform 106 may be configured as part of the rotor base 96 (see FIG. 2) where, for example, the rotor blades 98 are bonded to or formed integral with the rotor base 96. The present disclosure, however, is not limited to the foregoing exemplary platform arrangements.

The blade airfoil 102 of FIG. 3 projects spanwise along a span line 110 of the respective rotor blade 98 and its blade airfoil 102 (e.g., generally radially respective to the rotor axis 100) from the airfoil base 108 to a tip 112 of the blade airfoil 102, and more generally to a tip of the respective rotor blade 98. The airfoil tip 112 of FIG. 3 is disposed radially inboard of and next to, but spaced slightly inward from, an inner flowpath surface 114 of the respective rotor shroud 92. The blade airfoil 102 of FIG. 3 thereby projects spanwise out from an outer flowpath surface 116 of the platform 106, substantially radially across the core flowpath 42, to the airfoil tip 112.

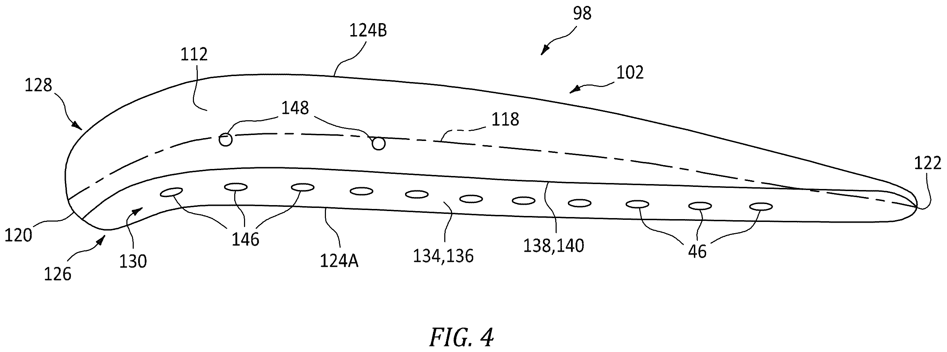

Referring to FIG. 4, the blade airfoil 102 extends longitudinally along a mean line 118 (e.g., a camber line) of the blade airfoil 102 from a leading edge 120 of the blade airfoil 102 to a trailing edge 122 of the blade airfoil 102. The blade airfoil 102 extends laterally (e.g., widthwise) between opposing sides 124A and 124B (generally referred to as "124") of the blade airfoil 102. The airfoil first side 124A of FIG. 4 is a concave, pressure side of the blade airfoil 102. The airfoil second side 124B of FIG. 4 is a convex, suction side of the blade airfoil 102. The airfoils sides 124 extend longitudinally between and may meet at the airfoil leading edge 120 and the airfoil trailing edge 122.

Referring to FIG. 3, the blade airfoil 102 includes a body section 126, a tip section 128 and a tip channel 130. The blade airfoil 102 also includes one or more internal cooling circuits 132A-C (generally referred to as "132").

The airfoil body section 126 is configured to form a substantial portion of the blade airfoil 102. The airfoil body section 126 of FIG. 3, for example, is connected to and extends spanwise between the platform 106 and the airfoil tip section 128. More particularly, the airfoil body section 126 of FIG. 3 projects spanwise out from the airfoil base 108 and the outer flowpath surface 116 to a spanwise distal end 134 of the airfoil body section 126. With this arrangement, the airfoil body section 126 may extend spanwise along and form, for example, at least eighty percent (80%) or ninety percent (90%) of a span of the blade airfoil 102. The airfoil body section 126 extends longitudinally between and forms the airfoil leading edge 120 and the airfoil trailing edge 122, spanwise between the platform 106 and the airfoil tip section 128. Referring to FIG. 4, the airfoil body section 126 extends laterally between the airfoil first side 124A and the airfoil second side 124B. The airfoil body section 126 of FIGS. 3 and 4 may completely form the airfoil first side 124A. The airfoil body section 126 of FIG. 4 may form the airfoil second side 124B, spanwise between the platform 106 of FIG. 3 and the airfoil tip section 128 of FIG. 3.

At the body section distal end 134 of FIG. 4, the airfoil body section 126 includes and forms a tip shelf 136 (e.g., a shelf surface) spanwise near the airfoil tip 112. This tip shelf 136 is a radial outer surface of the airfoil body section 126 (see also FIG. 3). The tip shelf 136 may extend longitudinally from (or about) the airfoil leading edge 120 to (or about) the airfoil trailing edge 122. The tip shelf 136 extends laterally from the airfoil first side 124A to the airfoil tip section 128 at a first side 138 of the airfoil tip section 128. At least a portion or an entirety of the tip shelf 136 may be planar (e.g., flat). At least a portion or an entirety of the tip shelf 136 may alternatively (or also) be curved (e.g., arcuate, splined, etc.) or otherwise non-flat.

Referring to FIG. 3, the airfoil tip section 128 is configured to form the blade airfoil 102 at the airfoil tip 112. The airfoil tip section 128 of FIG. 3, for example, extends spanwise between the airfoil body section 126 and the airfoil tip 112. More particularly, the airfoil tip section 128 of FIG. 3 projects spanwise out from the body section distal end 134 to the airfoil tip 112. With this arrangement, the airfoil tip section 128 may extend spanwise along and form, for example, a remainder of the blade airfoil 102 not formed by the airfoil body section 126. The airfoil tip section 128 extends longitudinally between and forms the airfoil leading edge 120 and the airfoil trailing edge 122, spanwise between the airfoil body section 126 and the airfoil tip 112. Referring to FIG. 4, the airfoil tip section 128 extends laterally between the airfoil second side 124B and the tip section first side 138. The airfoil tip section 128 of FIG. 4 may form the airfoil second side 124B, spanwise between the airfoil body section 126 of FIG. 3 and the airfoil tip 112. The airfoil tip section 128 of FIG. 4 may also (e.g., completely) form the airfoil tip 112 (a) longitudinally between the airfoil leading edge 120 and the airfoil trailing edge 122 and/or (b) laterally between the airfoil second side 124B and the tip section first side 138.

At the tip section first side 138 of FIG. 3, the airfoil tip section 128 includes and forms a tip sidewall 140 (e.g., a sidewall surface) spanwise between the tip shelf 136 and the airfoil tip 112. This tip sidewall 140 is a side surface of the airfoil tip section 128 (see also FIG. 4). The tip sidewall 140 may extend longitudinally from (or about) the airfoil leading edge 120 to (or about) the airfoil trailing edge 122. The tip sidewall 140 extends spanwise from the body section distal end 134 and its tip shelf 136 to the airfoil tip 112. Referring to FIG. 4, at least a portion or an entirety of the tip sidewall 140 may follow a contour of the airfoil first side 124A between the airfoil leading edge 120 and the airfoil trailing edge 122. The present disclosure, however, is not limited to such an exemplary tip sidewall arrangement.

Referring to FIG. 3, the airfoil tip channel 130 is disposed at the airfoil tip 112. This airfoil tip channel 130 projects spanwise into the blade airfoil 102 from the airfoil tip 112 to the airfoil body section 126 and its tip shelf 136. Referring to FIG. 4, the airfoil tip channel 130 projects laterally into the blade airfoil 102 from the airfoil first side 124A to the tip section first side 138. The airfoil tip section 128 of FIG. 4 is thereby laterally recessed inward from the airfoil first side 124A. The airfoil tip channel 130 of FIG. 4 extends longitudinally through the blade airfoil 102 from (or about) the airfoil leading edge 120 to (or about) the airfoil trailing edge 122. In other embodiments, however, it is contemplated the airfoil tip channel 130 may alternatively project longitudinally partially into the blade airfoil 102 from the airfoil leading edge 120 or the airfoil trailing edge 122, or the airfoil tip channel 130 may extend longitudinally partially within the blade airfoil 102.

Referring to FIG. 3, each cooling circuit 132 is configured to flow cooling air internally within the blade airfoil 102 to facilitate internal air cooling of the blade airfoil 102. Each cooling circuit 132 may also be configured to deliver the cooling air to one or more cooling apertures (e.g., film cooling apertures, effusion apertures, etc.) to film cool and/or otherwise facilitate external air cooling of the blade airfoil 102.

The first cooling circuit 132A may be configured as a leading edge and/or tip cooling circuit. The first cooling circuit 132A of FIG. 3, for example, includes a first circuit channel 142, one or more leading edge cooling apertures 144, one or more shelf cooling apertures 146 and/or one or more tip cooling apertures 148. The first circuit channel 142 of FIG. 3 projects spanwise into the blade airfoil 102 and its airfoil body section 126 from the airfoil base 108 towards (or to or into) the airfoil tip section 128. The first circuit channel 142 is fluidly coupled to each of the first circuit cooling apertures 144, 146, 148. The leading edge cooling apertures 144 are arranged spanwise along the airfoil leading edge 120 and may be formed in one or both of the airfoil sides 124. The shelf cooling apertures 146 are arranged longitudinally along and may be formed in the tip shelf 136 (see also FIG. 4). The tip cooling apertures 148 are arranged longitudinally along and may be formed in the airfoil tip 112 (see also FIG. 4).

The second cooling circuit 132B may be configured as a trailing edge cooling circuit. The second cooling circuit 132B of FIG. 3, for example, includes a second circuit channel 150 and one or more trailing edge cooling apertures 152. The second circuit channel 150 of FIG. 3 projects spanwise into the blade airfoil 102 and its airfoil body section 126 from the airfoil base 108 towards (or to or into) the airfoil tip section 128. The second circuit channel 150 is fluidly coupled to each of the trailing edge cooling apertures 152. The trailing edge cooling apertures 152 are arranged spanwise along the airfoil trailing edge 122 and may be formed in one or both of the airfoil sides 124.

The third cooling circuit 132C may be configured as an intermediate side cooling circuit. The third cooling circuit 132C of FIG. 3, for example, includes a third circuit channel 154 and one or more side cooling apertures 156. The third circuit channel 154 of FIG. 3 projects spanwise into the blade airfoil 102 and its airfoil body section 126 from the airfoil base 108 towards (or to or into) the airfoil tip section 128. The third circuit channel 154 is fluidly coupled to each of the side cooling apertures 156. The side cooling apertures 156 may be arranged spanwise along the airfoil body section 126 and may be formed in one or both of the airfoil sides 124.

During certain operating conditions, the airfoil tip section 128 of one, some or all of the blade airfoils 102 may radially contact and rub against the respective rotor shroud 92. This rubbing may remove (e.g., grind away, scrape away, chip away, etc.), deform (e.g., smear) and/or crack material of the respective blade airfoil 102 at its airfoil tip 112. Such rubbing may lead to an increased tip gap size between the respective airfoil tip 112 and the respective rotor shroud 92 during other operating conditions. Increasing the tip gap size may in turn increase leakage of gas (e.g., combustion products) over the respective airfoil tip 112. The rubbing may also or alternatively lead to partial or complete plugging up of one or more of the shelf cooling apertures 146 and/or one or more of the tip cooling apertures 148. This cooling aperture plugging may in turn reduce blade airfoil cooling proximate the airfoil tip 112, which may lead to further blade airfoil degradation.

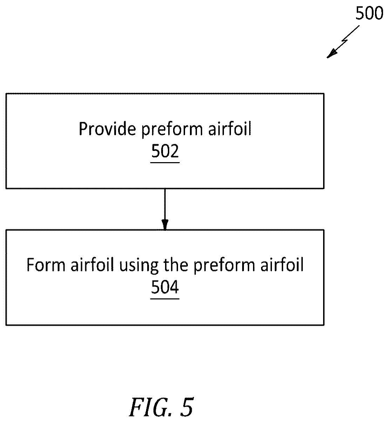

FIG. 5 is a flow diagram of a method 500 for manufacturing a rotor blade. For ease of description, this manufacturing method 500 is described below with respect to the rotor blade 98 of FIGS. 3 and 4. The manufacturing method 500 is also described below with respect to remanufacturing the rotor blade 98. The present disclosure, however, is not limited to manufacturing such an exemplary rotor blade nor to remanufacturing the rotor blade 98. A similar methodology, for example, may be used for original manufacture of the rotor blade 98.

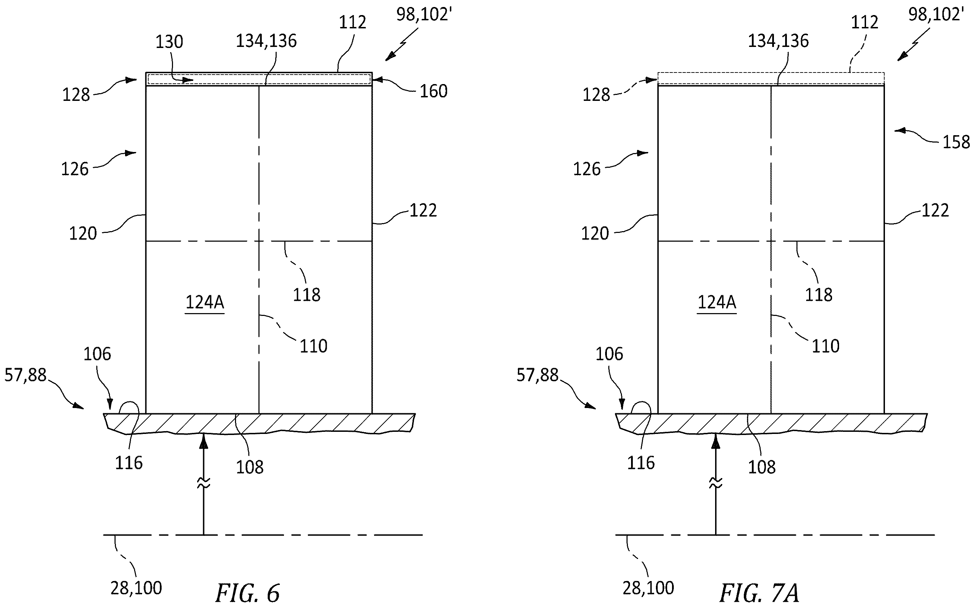

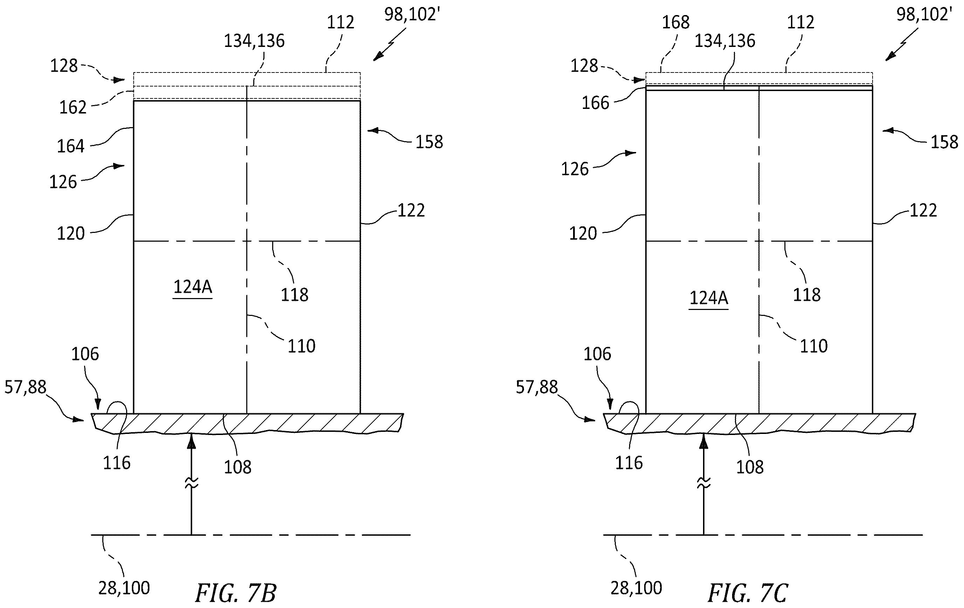

In step 502, a preform airfoil 158 is provided (see FIGS. 7A-C). For example, referring to FIG. 6, a rotor blade 98 with a previously manufactured airfoil 102' may be received. The previously manufactured airfoil 102' of FIG. 6 includes damage at its airfoil tip 112. This damage may be produced during, for example, operation of the turbine engine 24 (see FIG. 1), where the rotor blade 98 was previously installed in the turbine engine 24 during the turbine engine operation and the previously manufactured airfoil 102' rubbed against a respective rotor shroud 92 (see FIG. 3) as generally described above. Following disassembly of the rotor blade 98 from the turbine engine 24, a damaged portion 160 of the previously manufactured airfoil 102' may partially or completely be removed. The damaged portion 160 of the previously manufactured airfoil 102' of FIG. 6, for example, may be machined away to provide the preform airfoil 158 as shown in FIGS. 7A-C. Referring to FIG. 7A, the preform airfoil 158 may include an entirety of the airfoil body section 126 of the previously manufactured airfoil 102', while omitting an entirety of the airfoil tip section 128 of the previously manufactured airfoil 102'. For example, the airfoil tip section 128 of the previously manufactured airfoil 102' may be completely removed during the machining away of the damaged portion 160. Alternatively, referring to FIG. 7B, the preform airfoil 158 may include an inner portion 164 of the airfoil body section 126 of the previously manufactured airfoil 102', while omitting the entirety of the airfoil tip section 128 of the previously manufactured airfoil 102' as well as an outer portion 162 of the airfoil body section 126 of the previously manufactured airfoil 102'. For example, the airfoil tip section 128 and the outer portion 162 of the airfoil body section 126 of the previously manufactured airfoil 102' may be removed during the machining away of the damaged portion 160. Still alternatively, referring to FIG. 7C, the preform airfoil 158 may include the airfoil body section 126 and an inner portion 166 of the airfoil tip section 128 of the previously manufactured airfoil 102', while omitting an outer portion 168 of the airfoil body section 126 of the previously manufactured airfoil 102'. For example, the outer portion 168 of the airfoil tip section 128 of the previously manufactured airfoil 102' may be removed during the machining away of the damaged portion 160.

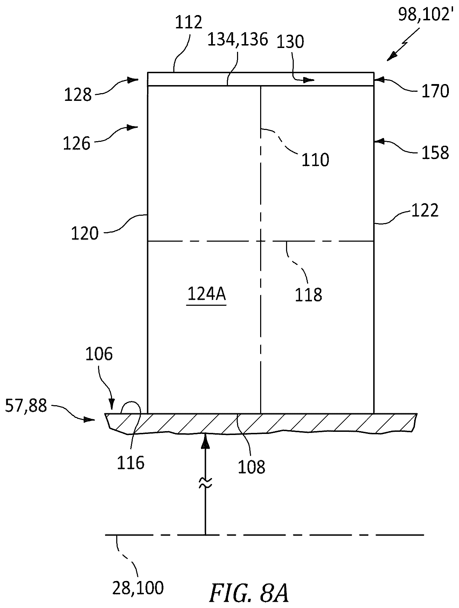

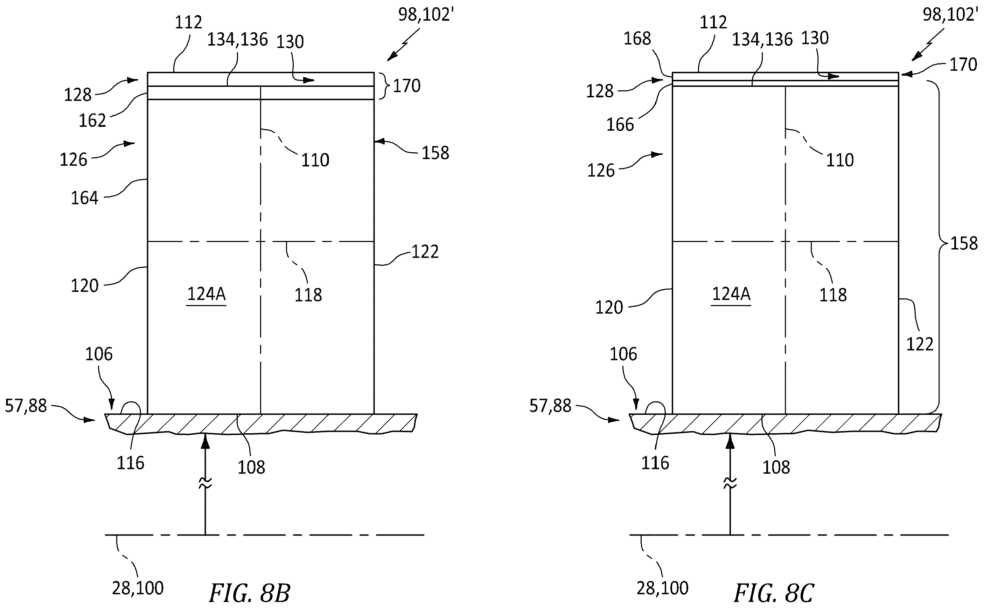

In step 504, referring to FIGS. 8A-C, a remanufactured airfoil 102' is formed for the rotor blade 98 using the preform airfoil 158. More particularly, material may be built up onto the preform airfoil 158 to form a tip cap 170. This tip cap 170 may restore one or more features of the previously manufactured airfoil 102' (see FIGS. 7A-C) that were removed during the machining away of the damaged portion 160 (see FIG. 6). This material may be built up onto the preform airfoil 158 layer-by-layer using an additive manufacturing process such as, but not limited to, a directed laser metal deposition process. Referring to FIG. 8A, the material is built up onto the preform airfoil 158 such that the tip cap 170 is configured as the airfoil tip section 128. Alternatively, referring to FIG. 8B, the material is built up onto the preform airfoil 158 such that the tip cap 170 includes the outer portion 162 of the airfoil body section 126 and the airfoil tip section 128. Still alternatively, referring to FIG. 8C, the material is built up onto the preform airfoil 158 such that the tip cap 170 is configured as the outer portion 168 of the airfoil tip section 128.

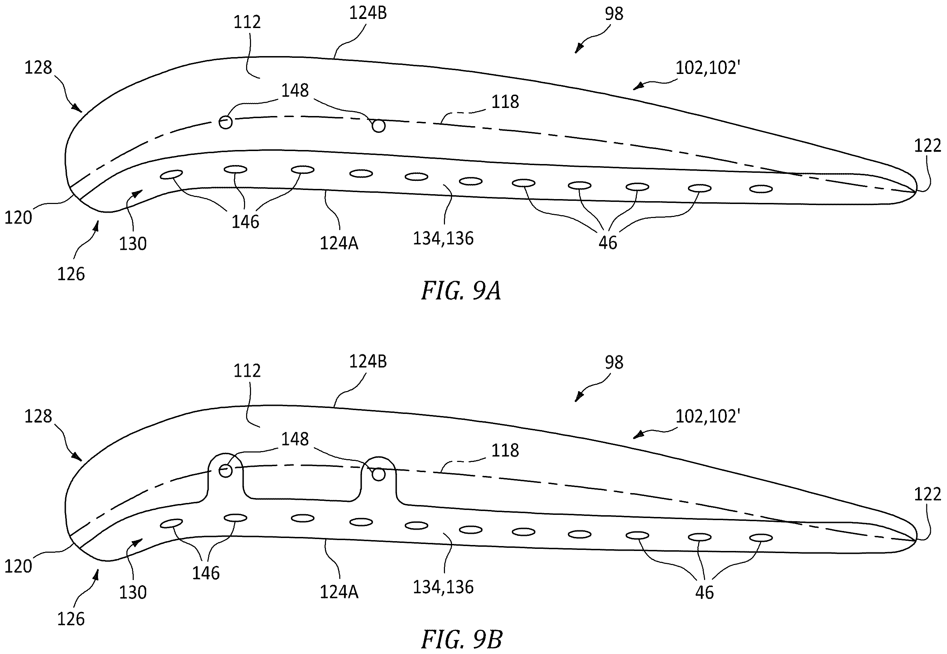

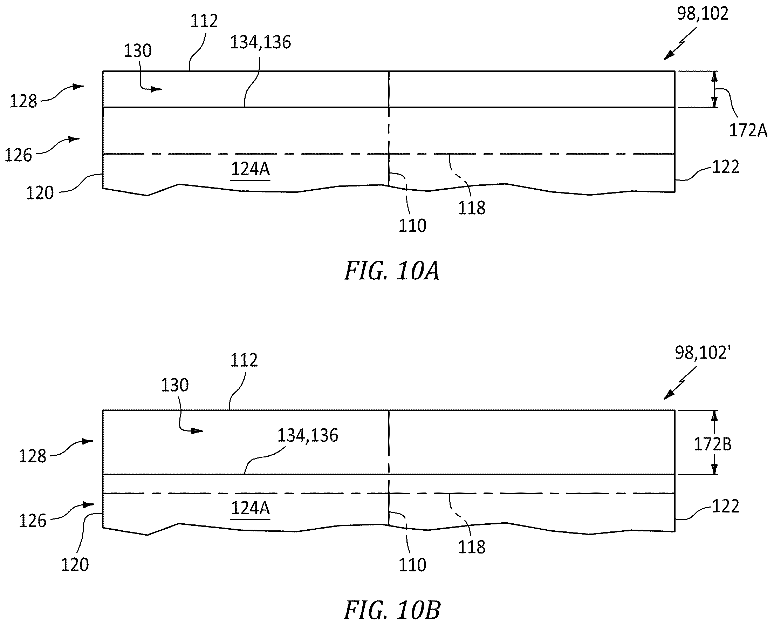

The restored feature(s) (e.g., 128 of FIG. 8A, 128 and 162 of FIG. 8B or 168 of FIG. 8C) may be formed according to an original design specification for the previously manufactured airfoil 102'. The restored feature(s) (e.g., 128 of FIG. 8A, 128 and 162 of FIG. 8B or 168 of FIG. 8C) may thereby have a common (e.g., the same) configuration (e.g., geometry, dimensions, etc.) as corresponding features had (or should have had) following an original manufacture of the previously manufactured airfoil 102'. The present disclosure, however, is not limited to identically restoring the feature(s) of the previously manufactured airfoil 102'. For example, one or more features may alternatively be formed (e.g., generally restored with one or more updates) during the step 504 according to a revised (e.g., updated) design specification, where the revised design specification is different than the original design specification for the previously manufactured airfoil 102'. The difference(s) between the revised design specification and the original design specification may be characterized by one or more parameters. These parameters may include, but are not limited to: (a) material selection; (b) feature material density and/or porosity; (c) feature geometry (e.g., shape); and/or (d) feature dimension(s). For example, according to the original design specification a feature such as the airfoil tip section 128 may be formed by a first material (e.g., a metal such as a nickel based superalloy), whereas the revised design specification may call for the airfoil tip section 128 to be formed by a second material (e.g., another metal such as another nickel based superalloy) different than the first material. In another example, according to the original design specification a feature such as the airfoil tip section 128 may be formed with a uniform first density, whereas the revised design specification may call for the airfoil tip section 128 to be formed with a uniform second density different than the first density or alternatively a varied density. In another example, according to the original design specification a feature such as the airfoil tip channel 130 may be formed with a first geometry (e.g., see FIG. 9A), whereas the revised design specification may call for the airfoil tip channel 130 to be formed with a second geometry (e.g., see FIG. 9B) different than the first geometry. In still another example, according to the original design specification a feature such as the airfoil tip channel 130 may be formed with a first height 172A (e.g., see FIG. 10A), wherein as the revised design specification may call for the airfoil tip channel 130 to be formed with a second height 172B (e.g., see FIG. 10B) different (e.g., greater) than the first height 172A.

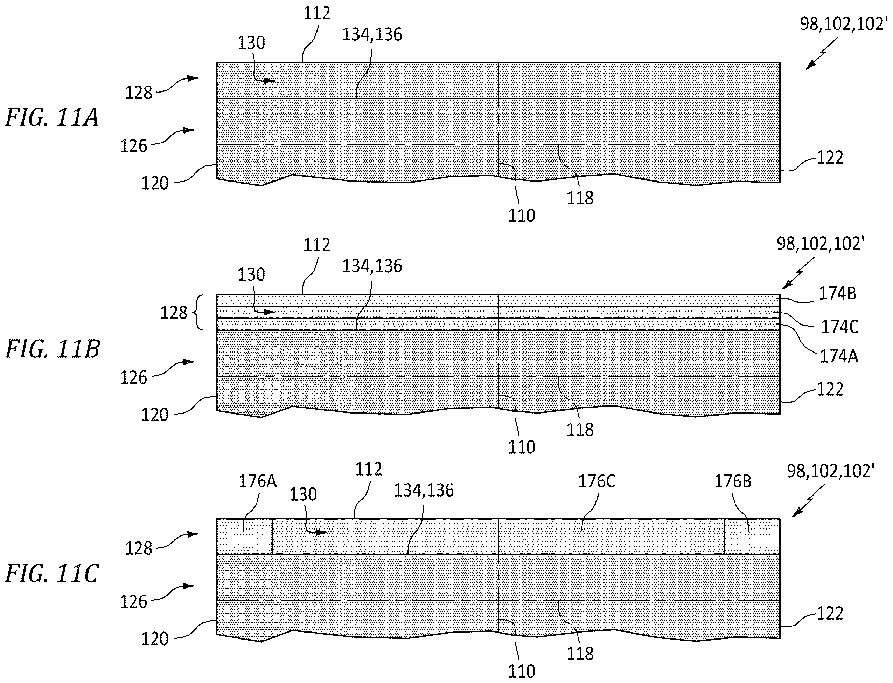

In some embodiments, referring to FIG. 11A, at least a portion or the entirety of the airfoil tip section 128 may be configured with a density and/or a porosity that is uniform (e.g., constant) as the airfoil tip section 128 extends (a) longitudinally along the airfoil tip channel 130 between the airfoil leading edge 120 and the airfoil trailing edge 122 and (b) spanwise along the airfoil tip channel 130 between the tip shelf 136 and the airfoil tip 112. In other embodiments, referring to FIGS. 11B and 11C, at least a portion or the entirety of the airfoil tip section 128 may be configured with a density and/or a porosity that varies longitudinally and/or spanwise along the airfoil tip channel 130. This variation in the density and/or the porosity may be continuous or incremental. The density and/or the porosity may be varied by changing one or more parameters for the additive manufacturing process. These parameters may include, but are not limited to: laser power; scanning velocity; powder flow rate; gas flow rate; hatch spacing; and/or speed.

Referring to FIG. 11B, the density of the airfoil tip section 128 may change (e.g., decrease) and/or the porosity of the airfoil tip section 128 may change (e.g., increase) as the airfoil tip section 128 projects spanwise out from the airfoil body section 126 and its tip shelf 136 to the airfoil tip 112. More particularly, the airfoil tip section 128 of FIG. 11B includes an inner density region 174A, an outer density region 174B and an intermediate density region 174C spanwise between and adjacent the inner density region 174A and the outer density region 174B. The inner density region 174A of FIG. 11B extends spanwise from the airfoil body section 126 and its tip shelf 136 to the intermediate density region 174C, and may have a spanwise uniform inner region density (e.g., about 90-95% of a density of the airfoil body section 126). The intermediate density region 174C of FIG. 11B may have a spanwise uniform intermediate region density (e.g., about 80-85% of the density of the airfoil body section 126) that is less than the inner region density. The outer density region 174B of FIG. 11B extends spanwise from the intermediate density region 174C to the airfoil tip 112, and may have a spanwise uniform outer region density (e.g., about 70-75% of the density of the airfoil body section 126) that is less than the intermediate region density. With such an arrangement, the outer density region 174B may be configured as at least partially abradable to avoid, for example, chipping or cracking upon rubbing.

Referring to FIG. 11C, the density of the airfoil tip section 128 may also or alternatively change (e.g., decrease) and/or the porosity of the airfoil tip section 128 may change (e.g., increase) as the airfoil tip section 128 extends longitudinally to the airfoil leading edge 120 and/or the airfoil trailing edge 122. More particularly, the airfoil tip section 128 of FIG. 11C includes a leading edge density region 176A, a trailing edge density region 176B and an intermediate density region 176C longitudinally between and adjacent the leading edge density region 176A and the trailing edge density region 176B. The leading edge density region 176A of FIG. 11C is disposed at and at least partially or completely forms the airfoil leading edge 120 spanwise along the airfoil tip section 128. This leading edge density region 176A may have a longitudinally uniform leading edge region density. The trailing edge density region 176B of FIG. 11C is disposed at and at least partially or completely forms the airfoil trailing edge 122 spanwise along the airfoil tip section 128. This trailing edge density region 176B may have a longitudinally uniform trailing edge region density, which may be equal to or different than the leading edge region density. The intermediate density region 176C of FIG. 11C may have a longitudinally uniform intermediate region density, which may be greater than the leading edge region density and/or the trailing edge region density. With such an arrangement, the leading edge density region 176A and/or the trailing edge density region 176B may be configured as at least partially abradable to avoid, for example, chipping or cracking upon rubbing.

In some embodiments, referring to FIGS. 8A-C, the preform airfoil 158 and the tip cap 170 built thereon may be formed from a common material; e.g., a metal such as a nickel super alloy. In other embodiments, the preform airfoil 158 and the tip cap 170 built thereon may be formed from different materials; e.g., different metals such as metallurgically compatible nickel alloys.

In some embodiments, the preform airfoil 158 and the tip cap 170 may be formed using different formation processes. The preform airfoil 158, for example, may be formed from cast material; e.g., cast metal such as a single crystal nickel super alloy. The tip cap 170, by contrast, may be formed from additive manufacturing as described above. The blade airfoil 102 of the present disclosure, however, is not limited to such exemplary formation techniques.

In some embodiments, the cooling apertures 146 and/or 148 (see FIGS. 3 and 4) may be formed (e.g., via negative space) in the tip cap 170 during the additive manufacturing process. In other embodiments, the cooling apertures 146 and/or 148 (see FIGS. 3 and 4) may be machined (e.g., drilled) in the tip cap 170 subsequent to the additive manufacturing process.

Each rotor blade 98 and its blade airfoil 102, 102' is generally described above as a bare metal body. However, it is contemplated some or all of an exterior of the blade airfoil 102, 102' may be coated with one or more coatings. Examples of these coatings include, but are not limited to, an environmental coating, an erosion coating, a thermal barrier coating and/or the like.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of manufacture, comprising:
providing an airfoil, the airfoil extending longitudinally between a leading edge and a trailing edge, the airfoil extending laterally between a first side and a second side, the airfoil extending spanwise from a base to a tip, the airfoil including a body section, a tip section and a channel, the body section extending spanwise from the base to a shelf, the body section extending laterally between the first side and the second side, the tip section connected to the body section and extending spanwise from the shelf to the tip, the tip section extending laterally between the second side and a sidewall, the channel projecting spanwise into the airfoil from the tip to the shelf, and the channel projecting laterally into the airfoil from the first side to the sidewall;
the providing of the airfoil comprising forming the tip section with a density that varies along the channel.

2. The method of claim 1, wherein the forming of the tip section comprises additively manufacturing the tip section.

3. The method of claim 2, wherein the additively manufacturing is performed using directed laser metal deposition.

4. The method of claim 1, 2 or 3, wherein
the providing of the airfoil further comprises casting or additively manufacturing the body section; and
the forming of the tip section comprises additively manufacturing the tip section onto the body section.

5. The method of claim 1, 2 or 3, wherein
the body section and an inner portion of the tip section are formed from cast or additively manufactured material; and
an outer portion of the tip section is additively manufactured onto the cast or additively manufactured material.

6. The method of claim 1, 2 or 3, wherein
an inner portion of the body section is formed from cast material; and
an outer portion of the body section is additively manufactured onto the cast material.

7. The method of any preceding claim, wherein the density varies longitudinally along the channel; and/or
wherein at least one of
the density at the leading edge is less than the density at an intermediate location longitudinally between the leading edge and the trailing edge; or
the density at the trailing edge is less than the density at the intermediate location.

8. The method of any preceding claim, wherein the density varies spanwise along the channel; and/or
wherein the density at the tip is less than the density at a location spanwise between the tip and the body section; and/or
wherein the density incrementally varies along the channel.

9. The method of any preceding claim, wherein the airfoil comprises one or more cooling apertures disposed on the tip; and/or
wherein the airfoil comprises one or more cooling apertures disposed on the shelf.

10. The method of any preceding claim, further comprising:
machining a previously manufactured airfoil to provide a preform airfoil, the preform airfoil comprising the body section; and
additively manufacturing at least a portion of the tip section onto the preform airfoil to provide the airfoil.

11. The method of claim 10, wherein the airfoil is provided according to an original design specification for the previously manufactured airfoil, or
wherein the airfoil is provided according to a revised design specification that is different than an original design specification for the previously manufactured airfoil.

12. The method of any preceding claim, wherein the body section and the tip section are formed by a common material.

13. The method of any preceding claim, further comprising:
installing a turbine blade into a turbine section of a turbine engine;
wherein the turbine blade comprises the airfoil.

14. A method of manufacture, comprising:
machining a previously manufactured airfoil to provide a preform airfoil;
building up material onto the preform airfoil using an additive manufacturing process to provide a remanufactured airfoil, the remanufactured airfoil comprising a body section and a tip section connected to the body section, and at least a portion of the tip section formed using the additive manufacturing process;
wherein the remanufactured airfoil is provided according to a design specification that is different than a design specification for the previously manufactured airfoil.

15. An apparatus for a turbine engine, comprising:
a turbine blade comprising an airfoil;
the airfoil extending longitudinally between a leading edge and a trailing edge, the airfoil extending laterally between a pressure side and a suction side, the airfoil extending spanwise from a base to a tip, and the airfoil including a body section, a tip section and a channel;
the body section extending spanwise from the base to a shelf, the body section extending laterally from the pressure side to the suction side, and the body section comprising one or more cooling apertures formed in the shelf;
the tip section connected to the body section, the tip section extending spanwise from the shelf to the tip, and the tip section extending laterally from the suction side to a sidewall; and
the channel projecting spanwise into the airfoil from the tip to the shelf, and the channel projecting laterally into the airfoil from the pressure side to the sidewall;
wherein a density of at least a portion of the tip section varies longitudinally and/or spanwise along the channel.
